# EUROPÄISCHE PATENTSCHRIFT

(11) **EP 2 924 259 B1**
(45) Veröffentlichungstag und Bekanntmachung des Hinweises auf die Patenterteilung: **12.12.2018**
(21) Anmeldenummer: 15153101.9
(22) Anmeldetag: 29.01.2015
(51) Int. Cl.: F01N 5/02, F02G 5/00, F02G 5/02, F02G 5/04, F01K 23/02, F01K 23/06

(54) **Antriebssystem**
Powertrain system
Système de motopropulsion

(30) Priorität: 25.03.2014 CH 4552014
(43) Veröffentlichungstag der Anmeldung: 30.09.2015
(73) Patentinhaber: Liebherr Machines Bulle SA, 1630 Bulle (CH)
(72) Erfinder: Seba, Bouzid Dr., 1636 Broc (CH); Engeter, Daniel, 68305 Mannheim (DE)
(74) Vertreter: Behr, Wolfgang

(56) Entgegenhaltungen:
- EP-A1- 0 636 779
- EP-A1- 1 916 396
- AT-A4- 507 096
- DE-A1-102007 021 526
- DE-A1-102007 050 259
- GB-A- 2 492 769
- US-A1- 2012 036 850

## Beschreibung

Die vorliegende Erfindung betrifft ein Antriebssystem mit einem Verbrennungsmotor und einem Energierückgewinnungssystem zur Rückgewinnung von Energie aus Abwärme, wobei das Energierückgewinnungssystem einen Fluidkreislauf mit mindestens einem Wärmetauscher aufweist.

Ein solches Antriebssystem ist aus der EP 2527635 A2 bekannt, deren Inhalt zum Gegenstand der vorliegenden Anmeldung gemacht wird. Dabei wird das Energierückgewinnungssystem dazu eingesetzt, um Abwärme des Verbrennungsmotors zu nutzen und insbesondere mechanische Energie umzuwandeln. Hierzu weist das Energierückgewinnungssystem einen Fluidkreislauf mit einer Pumpe, einem Wärmetauscher und einem Expander auf.

Aus dem Stand der Technik ist es bekannt, ein Energierückgewinnungssystem bei einem Verbrennungsmotor mit einem Turbolader einzusetzen. So zeigt DE 10 2007 050 259 A1 den Einsatz eines Wärmetauschers eines Energierückgewinnungssystems in einer By-Pass-Leitung, welche stromaufwärts der Turbine des Turboladers aus der Gesamtabgasleitung abzweigen kann. Die By-Pass-Leitung kann stromaufwärts der Turbine wieder in der Gesamtabgasleitung münden. Falls das Abgas nach Durchströmen des Wärmetauschers an der gleichen Stelle in die Gesamtabgasleitung eingeleitet wird, kann ein Drosselelement verwendet werden, um das für die By-Pass-Strömung notwendige Druckgefälle zu generieren..

Weitere Verbrennungsmotoren mit Turbolader und Energierückgewinnung sind aus den Druckschriften DE 10 2007 021 526 A1, EP 636 779 A1, GB 2492769 A und AT 507 096 A4 bekannt. EP 1 916 396 A1 zeigt die Ansteuerung eines By-Pass der Turbine eines Turboladers.

Ein Antriebssystem gemäß dem Oberbegriff von Anspruch 1 ist aus der US 2012/0036850 A1 bekannt. Dabei erfolgt eine Ansteuerung des Abgasstroms durch den Wärmetauscher des Energierückgewinnungssystems.

Aufgabe der vorliegenden Erfindung ist es, ein solches Antriebssystem weiterzuentwickeln.

Diese Aufgabe wird erfindungsgemäß durch ein Antriebssystem gemäß Anspruch 1 gelöst.

Durch den Einsatz eines erfindungsgemäßen Energierückgewinnungssystems in Kombination mit einem Turbolader kann die Abwärme des Antriebssystems noch effizienter und flexibler genutzt werden. Zum einen ergeben sich durch den Einsatz eines Turboladers weitere Möglichkeiten, den Wärmetauscher des Energierückgewinnungssystems in das Antriebssystem zu integrieren. Weiterhin kann gegebenenfalls neben der Abwärme des Verbrennungsmotors auch die Abwärme des Turboladers genutzt werden. Weiterhin ergeben sich durch die erfindungsgemäße Kombination aus Energierückgewinnungssystem und Turbolader zusätzliche Steuerungsmöglichkeiten.

Im Rahmen der vorliegenden Erfindung wird dabei bevorzugt ein Energierückgewinnungssystem eingesetzt, bei welchem das Arbeitsfluid von der Pumpe bedruckt wird und im Wärmetauscher Abwärme des Antriebssystems aufnimmt, wodurch es erwärmt und gegebenenfalls unter Aufnahme von weiterer Abwärme in weiteren Wärmetauschern in den gasförmigen Zustand wechselt. Das gasförmige Medium expandiert dann in einem Expander unter Abgabe von mechanischer Energie, bevor es in einem nachgeschalteten Kondensator rekondensiert. Die Abwärme wird so durch den Wärmetauscher des Energierückgewinnungssystems aufgenommen und schließlich in mechanische Energie umgewandelt, welche wieder genutzt werden kann.

Der Wärmetauscher weist dabei einen ersten Fluidweg auf, in welchem das Arbeitsfluid des Fluidkreislaufs des Energierückgewinnungssystems zirkuliert. Weiterhin weist der Wärmetauscher einen zweiten Fluidweg auf, mit welchem der Wärmetauscher an einen Fluidweg des Antriebssystems angeschlossen wird, um die in dem Fluid enthaltene Abwärme aufnehmen zu können.

Gemäß der vorliegenden Erfindung ist ein Wärmetauscher in einer Verbindungsleitung zwischen dem Verbrennungsmotor und dem Turbolader und ein weiterer Wärmetauscher in einer Umgehungsleitung des Turboladers angeordnet. Hierdurch ergibt sich eine besonders effiziente Kombination eines Energierückgewinnungssystems mit dem Turbolader.

Damit weist das erfindungsgemäße Antriebssystem mindestens zwei Wärmetauscher auf. Hierdurch können die unterschiedlichen Abwärmequellen und Temperaturniveaus im Antriebssystem besonders effizient genutzt werden. Gegebenenfalls können auch mehr als zwei Wärmetauscher vorhanden sein, insbesondere drei oder vier Wärmetauscher. Vorteilhafterweise sind die einzelnen Wärmetauscher dabei innerhalb des Fluidkreislaufs des Energierückgewinnungssystems in Serie geschaltet. Hierdurch kann das Arbeitsfluid des Energierückgewinnungssystems durch die einzelnen Wärmetauscher nacheinander erwärmt werden.

Erfindungsgemäß kann dabei vorgesehen sein, dass ein Wärmetauscher des Energierückgewinnungssystems in einem Kühlmittelkreislauf des Verbrennungsmotors angeordnet ist. Hierdurch kann zum einen das Kühlmittel im Kühlmittelkreislauf gekühlt werden, und zum anderen die hierbei entstehende Abwärme im Energierückgewinnungssystem genutzt werden. Insbesondere dient der Wärmetauscher im Kühlmittelkreislauf der Vorerwärmung des Arbeitsfluids.

Weiterhin kann gemäß einer möglichen Ausführungsform der vorliegenden Erfindung ein Wärmetauscher des Energierückgewinnungssystems in einer Ladeluftleitung zwischen dem Kompressor des Turboladers und dem Verbrennungsmotor angeordnet sein. Dabei muss die durch die Aufladung im Kompressor erhitzte Ladeluft meist ohnehin gekühlt werden. Die hierbei entstehende Abwärme kann so erfindungsgemäß dem Energierückgewinnungssystem zugeführt werden. Insbesondere dient der Wärmetauscher in der Ladeluftleitung der Vorerwärmung des Arbeitsfluids. Dabei kann die Ladeluft bspw. auf eine Temperatur zwischen 30° C und 80 ° C abgekühlt werden. Vorteilhafterweise erfolgt die Ansteuerung des Energierückgewinnungssystems dabei so, dass die Temperatur der Ladeluft einen vorgegebenen Temperaturwert nicht überschreitet.

Gemäß einer weiteren Ausführung der vorliegenden Erfindung kann ein Wärmetauscher stromabwärts eines Abgasnachbehandlungssystems in einem Abgasstrang des Verbrennungsmotors angeordnet sein. So kann die Abwärme im Abgas des Verbrennungsmotors ebenfalls dem Energierückgewinnungssystem zugeführt werden. Vorteilhafterweise dient dieser Wärmetauscher einer weiteren Vorerwärmung des Arbeitsfluids und/oder der Verdampfung des Arbeitsfluids.

Gemäß der vorliegenden Erfindung ist ein Wärmetauscher des Energierückgewinnungssystems in einer Bypassleitung zu der Turbine des Turboladers angeordnet. Eine solche Bypassleitung wird üblicherweise als Waste-Gate bezeichnet und dient dazu, Abgase des Verbrennungsmotors an der Turbine des Turboladers vorbei abzuleiten. Erfindungsgemäß kann durch den in diesem Waste-Gate angeordneten Wärmetauscher Wärmeenergie aus dem so am Turbolader vorbeigeführten Abgas genutzt und dem Energierückgewinnungssystem zugeführt werden. Vorteilhafterweise dient dieser Wärmetauscher der Verdampfung des Arbeitsfluids und/oder der Überhitzung des Arbeitsfluids.

Weiterhin ist gemäß der vorliegenden Erfindung ein Wärmetauscher zwischen den Verbrennungsmotor und der Turbine des Turboladers im Abgasstrang angeordnet, wodurch ebenfalls die Wärmeenergie aus dem Abgas genutzt werden kann. Vorteilhafterweise dient dieser Wärmetauscher der Verdampfung des Arbeitsfluids und/oder der Überhitzung des Arbeitsfluids.

Weiterhin kann ein Wärmetauscher des Energierückgewinnungssystems in einer Abgasrückführungsleitung des Verbrennungsmotors angeordnet werden. Auch hier muss das Abgas abgekühlt werden, wobei erfindungsgemäß nun die Energie aus der Abwärme zurückgewonnen werden kann.

Vorteilhafterweise sind dabei mindestens zwei der oben genannten Wärmetauscher an den oben genannten Positionen vorgesehen und weiterhin vorteilhafterweise in Serie geschaltet. Vorteilhafterweise erfolgt die Serienschaltung dabei in der Reihenfolge, in welcher die einzelnen Positionen des Wärmetauschers oben aufgeführt wurden. Hierdurch können die unterschiedlichen Temperaturniveaus von niedrigen bis zu hohen Temperaturen nacheinander genutzt werden, um das Arbeitsfluid des Energierückgewinnungssystems immer stärker zu erwärmen.

Alternativ oder zusätzlich kann auch eine Parallelschaltung von zwei oder mehr Wärmetauschern im Fluidkreislauf des Energierückgewinnungssystems erfolgen. Dies ist insbesondere dann sinnvoll, wenn die beiden Wärmetauscher auf in etwa dem gleichen Temperaturniveau arbeiten. So könnte bspw. ein Wärmetauscher im Abgasrückführungsstrang parallel zu einem Wärmetauscher in der By-Pass-Leitung des Turbogenerators oder vor dem Abgasturbolader im Fluidkreislauf vorgesehen werden.

Weiterhin ist denkbar, eine serielle Anordnung mit einer parallelen Anordnung zu kombinieren.

Erfindungsgemäß kann das Energierückgewinnungssystem auch zwei in Serie geschaltete Expander aufweisen. Vorteilhafterweise ist dabei ein Wärmetauscher im Fluidkreislauf des Energierückgewinnungssystems zwischen den beiden Expandern angeordnet. Insbesondere dient der Wärmetauscher dabei der Nacherhitzung des Arbeitsfluids. Insbesondere kann der Wärmetauscher dabei im Abgasstrang angeordnet sein, insbesondere im Abgasrückführungsstrang und/oder der By-Pass-Leitung des Turbogenerators und/oder vor dem Abgasturbolader.

Erfindungsgemäß ist ein Fluidstrom des abzukühlenden Mediums durch den Wärmetauscher ansteuerbar. Dies ist insbesondere dann von Vorteil, wenn die dem Wärmetauscher nachgeordneten Komponenten eine bestimmte Betriebstemperatur benötigen.

Das Antriebssystem weist bevorzugt eine Steuerung auf, welche den Abgasstrom durch den Wärmetauscher in Abhängigkeit von einer Temperatur des Abgases ansteuert. Insbesondere kann dabei ein Temperatursensor vorgesehen sein, welcher die Temperatur des Abgases mittelbar oder unmittelbar misst und den Fluidstrom durch den Wärmetauscher in Abhängigkeit von dieser Temperatur ansteuert. Insbesondere kann die Temperaturmessung dabei auch die Temperatur eines Abgasnachbehandlungssystems betreffen, welche von der Temperatur des Abgases abhängt.

Bevorzugt kann die Steuerung dabei so erfolgen, dass eine Mindesttemperatur in einem nachgeschalteten Abgasnachbehandlungssystem nicht unterschritten wird. Dabei benötigen Abgasnachbehandlungssysteme und insbesondere Katalysatoren oft eine gewisse Mindesttemperatur, um effektiv arbeiten zu können. Droht dabei die Temperatur des Abgasnachbehandlungssystems eine solche Mindesttemperatur zu unterschreiten, wird bevorzugt der Abgasstrom durch den Wärmetauscher verringert oder komplett unterbunden, um dem Abgas nicht zusätzlich Wärme zu entziehen, welche zum Erwärmen des Abgasnachbehandlungssystems benötigt wird.

In einer möglichen Ausführungsform der vorliegenden Erfindung kann die Ansteuerung des Abgasstroms durch den Wärmetauscher, welcher in einer Bypassleitung der Turbine des Turboladers angeordnet ist, durch eine Ventilanordnung erfolgen, welche in der Bypassleitung vorgesehen ist. Insbesondere kann die Ventilanordnung dabei geschlossen werden, wenn die Temperatur des Abgases oder die Temperatur des Abgasnachbehandlungssystems unter eine Mindesttemperatur sinkt. Bei der Ventilanordnung kann es sich dabei um ein Ventil im engeren Sinne oder beispielsweise eine Klappe handeln, über welche der Strom durch den Bypass angesteuert wird.

Für den Wärmetauscher, welcher stromaufwärts der Turbine des Turboladers angeordnet ist, ist ein steuerbarer Bypass für den Wärmetauscher vorgesehen. Auch hierdurch kann der Abgasstrom durch den Wärmetauscher angesteuert werden.

Weiterhin vorteilhafterweise weist das Antriebssystem eine Steuerung auf, welche den Betrieb des Energierückgewinnungssystems in Abhängigkeit von dem zur Verfügung stehenden Wärmeangebot ansteuert. Insbesondere kann dabei ein Temperatursensor vorgesehen sein, welcher die Temperatur in einem Bereich des Antriebssystems und insbesondere eine Temperatur des Mediums, welches in einem Wärmetauscher des Energierückgewinnungssystems Wärme abgibt, misst, wobei die Steuerung anhand der Daten des Temperatursensors das Energierückgewinnungssystem ansteuert.

Die Ansteuerung des Energierückgewinnungssystem kann dabei insbesondere die Ansteuerung des Massenstroms durch den Fluidkreislauf umfassen, und/oder die Ansteuerung der Drehzahl der Pumpe des Energierückgewinnungssystems und/oder die Ansteuerung eines Betriebsdrucks an einer Stelle im Fuidkreislauf des Energierückgewinnungssystems. Insbesondere kann dabei die Drehzahl der Pumpe und/oder der Betriebsdruck bei steigendem Wärmeangebot bzw. steigenden Temperaturen erhöht werden.

Der Temperatursensor kann dabei insbesondere die Temperatur des Kühlmediums im Kühlsystem des Verbrennungsmotors und/oder der Ladeluft und/oder des Abgases messen. Sind dabei mehrere Wärmetauscher vorgesehen, so werden vorteilhafterweise auch mehere Temperatursensoren eingesetzt, über welche die jeweils zur Verfügung stehende Wärmeenergie an den einzelnen Wärmetauschern bestimmt werden kann.

Alternativ oder zusätzlich kann das Antriebssystem eine Steuerung aufweisen, welche den Betrieb des Energierückgewinnungssystems in Abhängigkeit von Betriebsparametern des Verbrennungsmotors und/oder des Turboladers ansteuert ansteuert.

Die Ansteuerung des Energierückgewinnungssystem kann dabei insbesondere die Ansteuerung der Drehzahl der Pumpe des Energierückgewinnungssystems und/oder die Ansteuerung eines Betriebsdrucks an einer Stelle im Fuidkreislauf des Energierückgewinnungssystems umfassen.

Weiterhin kann das Energierückgewinnungssystem einen oder mehrere Sensoren aufweisen, welche den Druck und/oder die Temperatur an einer Stelle im Fluidkreislauf bestimmen. Vorteilhafterweise wird dabei der Druck und/oder die Temperatur am Eingang des Expanders gemessen. Weiterhin vorteilhafterweise geht der Druck und/oder die Temperatur in die Ansteuerung des Energierückgewinnungssystems ein, insbesondere in die Ansteuerung der Pumpe. Dabei können der Druck und/oder die Temperatur insbesondere als Regelgrößen dienen. Der Sollwert der Regelgröße kann dabei vorteilhafterweise auf Grundlage des Wärmeangebots und/oder Betriebsparametern des Verbrennungsmotors und/oder des Turboladers vorgegeben werden.

Als Arbeitsfluid des Energierückgewinnungssystems wird vorteilhafterweise ein organisches Arbeitsmedium eingesetzt, insbesondere Ammoniak. Weiterhin wäre auch der Einsatz von Wasser denkbar.

Insbesondere umfasst das Energierückgewinnungssystem dabei einen Fluidkreislauf mit mindestens einem Wärmetauscher, welcher wie oben dargestellt bevorzugt in einer Verbindungsleitung zwischen dem Turbolader und dem Verbrennungsmotor und / oder einer Umgehungsleitung des Turboladers anordenbar ist. Bevorzugt ist das Energierückgewinnungssystem dabei so ausgeführt, wie dies bereits oben näher beschrieben wurde.

Die vorliegende Erfindung umfasst weiterhin ein Arbeitsgerät und / oder Fahrzeug mit einem Antriebssystem, wie es oben dargestellt wurde. Das Antriebssystem kann dabei beispielsweise zum Antrieb eines Fahrwerks und / oder zum Antrieb einer Arbeitsausrüstung und/oder zum Antrieb eines Generators dienen. Weiterhin kann vorgesehen sein, dass das Antriebssystem eine Hydraulikpumpe eines Hydrauliksystems antreibt. Bei dem Arbeitsgerät kann es sich dabei insbesondere um ein verfahrbares Arbeitsgerät handeln. Jedoch ist auch der stationäre Einsatz denkbar, bspw. in einer Energieerzeugungseinheit zum Antrieb eines Generators zur Erzeugung elektrischen Stroms.

Die vorliegende Erfindung wird nun anhand eines Ausführungsbeispiels sowie einer Zeichnung näher beschrieben.

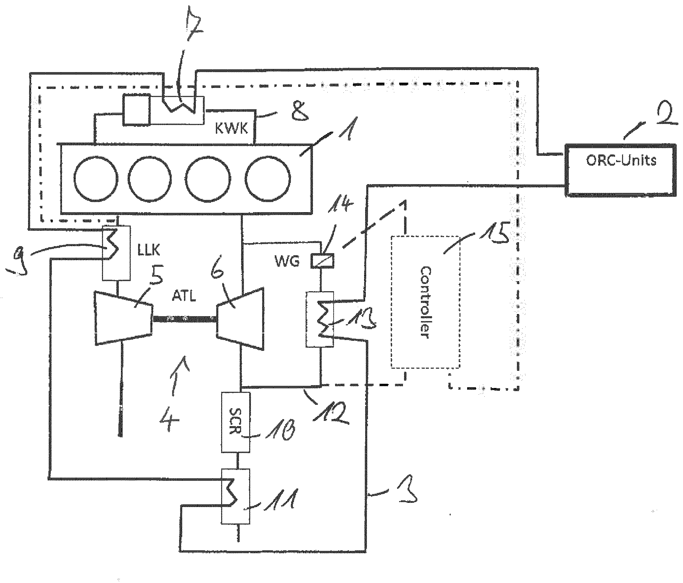

Dabei zeigt:
- Die einzige Figur:: eine Prinzipdarstellung eines Ausführungsbeispiels eines Energierückgewinnungssystems, in welcher allerdings nicht alle Elemente eines Energierückgewinnungssystems gemäß der vorliegenden Erfindung eingezeichnet sind.

Die einzige Figur zeigt ein Ausführungsbeispiel eines Antriebssystems mit einem Verbrennungsmotor 1, welcher mit einem Turbolader 4 ausgestattet ist. Der Turbolader 4 weist dabei einen Kompressor 5 auf, mit welchem die dem Verbrennungsmotor 1 zugeführte Ladeluft komprimiert wird. Weiterhin weist der Turbolader 4 eine Turbine 6 auf, welche im Abgasstrang des Verbrennungsmotors 1 angeordnet ist und über das aus dem Verbrennungsmotor ausströmende Abgas angetrieben wird. Der Kompressor 5 wird dabei über die Turbine 6 des Turboladers angetrieben, wobei Kompressor und Turbine bevorzugt auf eine gemeinsame Achse angeordnet sind. Der Verbrennungsmotor weist weiterhin einen Kühlkreislaus 8 auf, in welchem ein Kühlfluid zirkuliert. Bei dem Verbrennungsmotor 1 kann es sich insbesondere um einen Dieselmotor handeln.

Es ist weiterhin ein Energierückgewinnungssystem 2 vorgesehen. Dieses weist einen Fluidkreislauf 3 auf, in welchem mehrere Wärmetauscher 7, 9, 11 und 13 angeordnet sind. Das Energierückgewinnungssystem 2 weist neben den Wärmetauschern weiterhin eine Pumpe, mindestens einen Expander und einen Kondensator auf, welche in der Figur nicht näher dargestellt sind.

Es zirkuliert dabei ein Arbeitsmedium im Fluidkreislauf 3 des Energierückgewinnungssystems. Das Arbeitsmedium nimmt dabei in den Wärmetauschern Abwärme auf und wird hierdurch erwärmt, bis es schließlich in den gasförmigen Zustand wechselt. Das gasförmige Medium expandiert dann im Expander unter Abgabe von mechanischer Energie. Der Kondensator des Energierückgewinnungssystems sorgt dann für eine Rekondensierung des gasförmigen Mediums, welches dann gegebenfalls unter Zwischenschaltung eines Tanks zur Pumpe zurückfließt. Die Pumpe erhöht den Druck des Arbeitsfluids vor dem Eintritt in den ersten Wärmetauscher und sorgt so für eine Zirkulation des Mediums im Fluidkreislauf. Gegebenenfalls können auch zwei oder mehr Expander im Fluidkreislauf in Serie geschaltet sein, wobei in diesem Fall vorteilhafterweise ein Wärmetauscher zwischen den Expandern angeordnet ist.

Die vom Energierückgewinnungssystem erzeugte mechanische Energie kann in die vom Verbrennungsmotor erzeugte mechanische Energie eingekoppelt werden. Hierzu können die Abtriebswellen des Expanders des Energierückgewinnungssystems und des Verbrennungsmotors beispielsweise über ein Getriebe und/ oder eine Kupplung miteinander gekoppelt sein. Alternativ kann der Expander auch als separate Antriebsquelle neben dem Verbrennungsmotor eingesetzt werden, beispielsweise um Nebenaggregate anzutreiben.

Die Kombination aus einem Energierückgewinnungssystem und einem Turbolader ermöglicht eine noch effektivere Nutzung der Abwärme des Antriebssystems. Dabei können insbesondere eine oder mehrere der Wärmetauscher des Rückgewinnungssystems in einer Verbindungsleitung zwischen dem Turbolader und dem Verbrennungsmotor und/ oder einer Umgehungsleitung des Turboladers angeordnet sein. Weiterhin können mehrere Wärmetauscher in Serie geschaltet werden.

Bei dem in der Figur gezeigten Ausführungsbeispiel ist ein erster Wärmetauscher 7 im Kühlkreislauf 8 des Verbrennungsmotors 1 angeordnet. Hierdurch erfolgt eine erste Vorerwärmung des Arbeitsfluids des Energierückgewinnungssystems durch die Aufnahme von Wärme aus den Kühlkreislauf. Der Wärmetauscher 7 kann dabei anstelle oder zusätzlich zu einem Kühler im Kühlkreislauf 8 angeordnet sein.

Der zweite Wärmetauscher 9 ist dann im Ladeluftstrang zwischen dem Kompressor 5 und dem Verbrennungsmotor 1 angeordnet. Der Wärmetauscher 9 kann dabei entweder anstelle oder zusätzlich zu einem in diesem Ladeluftstrang angeordneten Kühler vorgesehen sein. Der Wärmetauscher 9 nimmt dabei die durch die Kompression der Ladeluft entstehende, unerwünschte Wärme auf.

Ein dritter Wärmetauscher 11 des Energierückgewinnungssystems ist im Abgasstrang stromabwärts eines Abgasnachbehandlungssystems 10 angeordnet. Der Wärmetauscher nimmt hierdurch Abwärme, welche im Abgas des Verbrennungsmotors nach dem Durchströmen des Abgasnachbehandlungssystems verbleibt, auf. Hier kann bereits eine Verdampfung es Arbeitsfluid erfolgen.

Bei dem Abgasnachbehandlungssystem kann es sich dabei insbesondere um einen Katalysator handeln. Insbesondere kann es sich dabei um ein SCR-Katalysator handeln. Das Abgasnachbehandlungssystem 10 kann dabei eine Mindesttemperatur aufweisen, welche zu einer effektiven Abgasnachbehandlung benötigt wird. Insbesondere kann es sich bei der Abgasnachbehandlung dabei um eine NOX Reduktion handeln.

Das Energierückgewinnungssystem weist einen vierten Wärmetauscher 13 auf, welcher im Abgasstrang zwischen dem Verbrennungsmotor 1 und dem Abgasnachbehandlungssystem 10 angeordnet ist. Um zu verhindern, dass das Abgas durch den Wärmetauscher 13 so stark abgekühlt wird, dass die Temperatur des Abgasnachbehandlungssystems 10 unter die Mindesttemperatur fällt, ist der Abgasstrom durch den Wärmetauscher 13 steuerbar. Hierzu ist eine Steuerung 15 vorgesehen, welche eine Ventilanordnung 14 steuert.

Der Wärmetauscher 13 ist in einer Bypassleitung 12 zu der Turbine 6 des Abgasturboladers 4 angeordnet. Diese Bypassleitung 12 wird dabei üblicherweise als Waste Gate bezeichnet und dient dazu, Abgas des Verbrennungsmotors 1 um die Turbine 6 herumzuleiten.

Im Ausführungsbeispiel ist die Ventilanordnung 14, welche den Abgasstrom durch den Wärmetauscher 13 ansteuert, in der Bypassleitung 12 vordem Wärmetauscher 13 angeordnet. Die Ansteuerung der Ventilanordnung 14 erfolgt dabei zum einen auf Grundlage der Temperatur des Abgases. Weiterhin kann die Steuerung aufgrund eines Betriebszustand des Verbrennungsmotors oder Abgasturboladers erfolgen. Die Ventilanordnung 14 übernimmt dabei zum einen die Ansteuerung des Waste Gates anhand von Betriebsbedingungen des Verbrennungsmotors 1 und/ oder des Turboladers 4, sowie gleichzeitig anhand der Temperatur des Abgases.

Alternativ wäre erdenkbar, eine Bypassleitung für den Wärmetauscher 13 vorzusehen, um so den Strom durch den Wärmetauscher 13 und den Strom durch das Waste Gate separat ansteuern zu können.

Gemäß der vorliegenden Erfindung ist ein weiterer Wärmetauscher, welcher in der Zeichnung nicht dargestellt ist, in der Abgasleitung zwischen den Verbrennungsmotor 1 und der Turbine 6 angeordnet sein. Dabei ist ein Bypass für den weiteren Wärmetauscher vorgesehen, welcher über den Controller 15 angesteuert werden kann.

Im Ausführungsbeispiel wird das Kühlwasser des Verbrennungsmotors zunächst zur Vorerwärmung des Arbeitsmediums verwendet. Anschließend erfolgt eine weitere Erwärmung durch den als Ladeluftkühler eingesetzten Wärmetauscher 9. Diese wird so geregelt, dass am Motor eine Maximallufttemperatur nicht überschritten wird. Die Verdampfung erfolgt mit dem Abgasmassenstrom nach dem Turbolader bzw. nach dem Abgasnachbehandlungssystem im Wärmetauscher 11. Eine weitere Überhitzung des Arbeitsmediums kann anschließend bei hoher Abgastemperatur im Waste-Gate-Pfad mit dem Wärmetauscher 13 erfolgen. Diese Überhitzung wird durch einen zusätzlichen Regelkreislauf so gesteuert, dass die Mindesteintrittstemperatur im Abgasnachbehandlungssystem nicht unterschritten wird.

Erfindungsgemäß kann die Kühlung der Ladeluft im Wärmetauscher 9 so angesteuert bzw. geregelt werden, dass am Motor eine Maximallufttemperatur nicht überschritten wird. Vorteilhafterweise steht die Steuerung 15 hierfür mit einem Temperatursensor in Verbindung, welche die Temperatur der Ladeluft misst. Die Temperatursteuerung oder -regelung kann dabei insbesondere durch eine entsprechende Ansteuerung der Pumpe des Energierückgewinnungssystems erfolgen. Alternativ oder zusätzlich ist es denkbar, einen entsprechend ansteuerbaren Beipass für den Wärmetauscher 9 vorzusehen.

Erfindungsgemäß sind die mehreren Wärmetauscher dabei in den Fluidkreislauf des Energierückgewinnungssystems seriell angeordnet. Hierdurch können die unterschiedlichen Temperaturniveaus in den einzelnen Abwärmebereichen optimal genutzt werden, um das Arbeitsfluid des Energierückgewinnungssystems schrittweise zu erwärmen.

Dabei weist das Antriebssystem eine Steuerung auf, welche den Betrieb des Energierückgewinnungssystems in Abhängigkeit von dem zur Verfügung stehenden Wärmeangebot ansteuert. Insbesondere sind dabei mehrere Temperatursensoren vorgesehen, welche die Temperatur des Mediums, welches in den jeweiligen Wärmetauscheren des Energierückgewinnungssystems Wärme abgibt, messen, wobei die Steuerung anhand der Daten der Temperatursensoren das Energierückgewinnungssystem ansteuert.

Alternativ oder zusätzlich kann das Antriebssystem eine Steuerung aufweisen, welche den Betrieb des Energierückgewinnungssystems in Abhängigkeit von Betriebsparametern des Verbrennungsmotors und/oder des Turboladers ansteuert ansteuert.

Die Ansteuerung des Energierückgewinnungssystem erfolgt dabei durch die Ansteuerung des Massenstroms durch den Fluidkreislauf, wobei insbesondere die Drehzahl der Pumpe des Energierückgewinnungssystems entsprechend angesteuert wird. Insbesondere kann dabei die Drehzahl der Pumpe bei steigendem Wärmeangebot bzw. steigenden Temperaturen erhöht werden.

Als Regelgröße zur Ansteuerung des Energierückgewinnungssystem dient dabei bevorzugt der Druck und/oder die Temperatur an einer Stelle im Fluidkreislauf, insbesondere am Eingang des Expanders. Der Sollwert der Regelgröße wird dann auf Grundlage des Wärmeangebots und/oder Betriebsparametern des Verbrennungsmotors und/oder des Turboladers vorgegeben.

Als Arbeitsfluid für das Energierückgewinnungssystem kann dabei insbesondere ein organisches Fluid, insbesondere Ammoniak oder Wasser eingesetzt werden.

## Patentansprüche

1. Antriebssystem mit einem Verbrennungsmotor (1) und mit einem Energierückgewinnungssystem (2) zur Rückgewinnung von Energie aus Abwärme, wobei das Energierückgewinnungssystem einen Fluidkreislauf (3) mit mindestens einem Wärmetauscher (7, 9, 11, 13), einer Pumpe und einem Expander zur Umwandlung der Abwärme in mechanische Energie aufweist, wobei ein Fluidstrom durch mindestens einen Wärmetauscher ansteuerbar ist,
**dadurch gekennzeichnet,**
**dass** der Verbrennungsmotor einen Turbolader (4) aufweist und ein Wärmetauscher in einer Verbindungsleitung zwischen dem Verbrennungsmotor (1) und einer Turbine (6) des Turboladers (4) stromaufwärts der Turbine des Turboladers angeordnet ist, wobei ein steuerbarer By-Pass für den Wärmetauscher vorgesehen ist, wobei ein weiterer Wärmetauscher (13) des Energierückgewinnungssystems in einer By-Pass-Leitung der Turbine (6) des Turboladers angeordnet ist.

2. Antriebssystem nach Anspruch 1, wobei das Energierückgewinnungssystem mindestens zwei Wärmetauscher (7, 9, 11, 13) aufweist, welche vorteilhafterweise in Serie geschaltet sind.

3. Antriebssystem nach einem der vorangegangenen Ansprüche, wobei ein weiterer Wärmetauscher (7) des Energierückgewinnungssystems in einem Kühlmittelkreislauf (8) des Verbrennungsmotors und/oder in einer Ladeluftleitung zwischen dem Kompressor (5) des Turboladers und dem Verbrennungsmotor (1) und/oder stromabwärts eines Abgasnachbehandlungssystems (10) in einem Abgasstrang des Verbrennungsmotors angeordnet ist, wobei der weitere Wärmetauscher im Fluidkreislauf (3) des Energierückgewinnungssystems in Serie mit dem mindestens einen Wärmetauscher (13) und in Bezug auf diesen stromabwärts angeordnet ist.

4. Antriebssystem nach einem der vorangegangenen Ansprüche, wobei ein weiterer Wärmetauscher (13) des Energierückgewinnungssystems in einer Abgasrückführungsleitung des Verbrennungsmotors angeordnet ist.

5. Antriebssystem nach einem der vorangegangenen Ansprüche, wobei zwei oder mehr Wärmetauscher im Fluidkreislauf des Energierückgewinnungssystem parallel geschaltet sind, wobei vorteilhafterweise mindestens ein dritter Wärmetauscher seriell geschaltet ist.

6. Antriebssystem nach einem der vorangegangenen Ansprüche, wobei das Antriebssystem eine Steuerung (15) aufweist, welche den Abgasstrom durch den mindestens einen Wärmetauscher (13) in Abhängigkeit von einer Temperatur des Abgases ansteuert.

7. Antriebssystem nach Anspruch 6, wobei die Steuerung so erfolgt, dass eine Mindesttemperatur in einem nachgeschalteten Abgasnachbehandlungssystem (10) nicht unterschritten wird.

8. Antriebssystem nach einem der vorangegangenen Ansprüche, wobei ein weiterer Wärmetauscher (13) in einer By-Pass-Leitung der Turbine (6) des Turboladers angeordnet ist und die Ansteuerung des Abgasstroms durch eine Ventilanordnung (14) erfolgt, welche in der By-Pass-Leitung (12) vorgesehen ist.

9. Antriebssystem nach einem der vorangegangenen Ansprüche, mit einer Steuerung, welche den Abgasstrom durch den mindestens einen Wärmetauscher (13) in Abhängigkeit von einer Temperatur des Abgases und Betriebsbedingungen des Turboladers ansteuert

10. Antriebssystem nach einem der vorangegangenen Ansprüche mit einer Steuerung, welche den Betrieb des Energierückgewinnungssystems in Abhängigkeit von dem zur Verfügung stehenden Wärmeangebot und/oder Betriebsparametern des Verbrennungsmotors und/oder des Turboladers ansteuert.

11. Antriebssystem nach Anspruch 10, wobei ein Temperatursensor vorgesehen ist, welcher die Temperatur in einem Bereich des Antriebssystems und insbesondere eine Temperatur des Mediums, welches in einem Wärmetauscher des Energierückgewinnungssystems Wärme abgibt, misst, wobei die Steuerung anhand der Daten des Temperatursensors das Energierückgewinnungssystem ansteuert.

12. Antriebssystem nach Anspruch 10 oder 11, wobei das Energierückgewinnungssystem einen oder mehrere Sensoren aufweist, welche den Druck und/oder die Temperatur an einer Stelle im Fluidkreislauf bestimmen, wobei der Druck und/oder die Temperatur als Regelgrößen in die Ansteuerung des Energierückgewinnungssystems eingehen, und wobei ein Sollwert der Regelgröße auf Grundlage des Wärmeangebots und/oder Betriebsparametern des Verbrennungsmotors und/oder des Turboladers vorgegeben wird.

13. Antriebssystem nach Anspruch einem der Ansprüche 10 bis 12, wobei die Ansteuerung des Energierückgewinnungssystems die Ansteuerung des Massenstroms durch den Fluidkreislauf des Energierückgewinnungssystems und/oder die Ansteuerung der Drehzahl der Pumpe des Energierückgewinnungssystems und/oder die Ansteuerung eines Betriebsdrucks an einer Stelle im Fuidkreislauf des Energierückgewinnungssystems umfasst.

14. Arbeitsgerät und/oder Fahrzeug mit einem Antriebssystem nach einem der vorangegangenen Ansprüche, wobei das Antriebssystem vorteilhafterweise zum Antrieb eines Fahrwerks und/oder einer Arbeitsausrüstung und/oder des Antriebs eines Generators dient, und/oder wobei das Antriebssystem eine Hydraulikpumpe eines Hydrauliksystems antreibt.

## Claims

1. A powertrain system having an internal combustion engine (1) and having an energy recovery system (2) for recovering energy from waste heat, wherein the energy recovery system has a fluid circuit (3) having at least one heat exchanger (7, 9, 11, 13), having a pump, and having an expander for converting the waste heat into mechanical energy, with a fluid flow through at least one heat exchanger being able to be controlled,
**characterized in that**
the internal combustion engine has a turbocharger (4), and **in that** a heat exchanger is arranged upstream of a turbine of the turbocharger in a connection line between the combustion engine (1) and a turbine (6) of the turbocharger (4), with a controllable bypass for the heat exchanger being provided, and with a further heat exchanger (13) of the energy recovery system being arranged in a bypass line of the turbine (6) of the turbocharger.

2. A powertrain system in accordance with claim 1, wherein the energy recovery system has at least two heat exchangers (7, 9, 11, 13) that are advantageously connected in series.

3. A powertrain system in accordance with one of the preceding claims, wherein a further heat exchanger (7) of the energy recovery system is arranged in a coolant circuit (8) of the internal combustion engine and/or in a charge air line between the compressor (5) of the turbocharger and the internal combustion engine (1) and/or downstream of an exhaust aftertreatment system (10) in an exhaust train of the internal combustion engine; wherein the further heat exchanger is arranged in the fluid circuit (3) of the energy recovery system in series with the at least one heat exchanger (13) and is arranged downstream with respect to it.

4. A powertrain system in accordance with one of the preceding claims, wherein a further heat exchanger (13) of the energy recovery system is arranged in an exhaust gas recirculation line of the internal combustion engine.

5. A powertrain system in accordance with one of the preceding claims, wherein two or more heat exchangers are connected in parallel in the fluid circuit of the energy recovery system, and wherein at least one third heat exchanger is advantageously connected in series.

6. A powertrain system in accordance with one of the preceding claims, wherein the powertrain system has a control (15) that controls the exhaust gas flow through the at least one heat exchanger (13) in dependence on a temperature of the exhaust gas.

7. A powertrain system in accordance with claim 6, wherein the control takes place such that a minimum temperature is not fallen below in a downstream exhaust aftertreatment system (10).

8. A powertrain system in accordance with one of the preceding claims, wherein a further heat exchanger (13) is arranged in a bypass line of the turbine (6) of the turbocharger and the control of the exhaust gas flow takes place by a valve arrangement (14) that is provided in the bypass line (12).

9. A powertrain system in accordance with one of the preceding claims, having a control that controls the exhaust gas flow through the at least one heat exchanger (13) in dependence on a temperature of the exhaust gas and on operating conditions of the turbocharger.

10. A powertrain system in accordance with one of the preceding claims, having a control that controls the operation of the energy recovery system in dependence on the provided available heat and/or on operating parameters of the internal combustion engine and/or of the turbocharger.

11. A powertrain system in accordance with claim 10, wherein a temperature sensor is provided that measures the temperature in a region of the powertrain system and in particular a temperature of the medium that outputs heat in a heat exchanger of the energy recovery system, with the control controlling the energy recovery system with reference to the data of the temperature sensor.

12. A powertrain system in accordance with claim 10 or claim 11, wherein the energy recovery system has one or more sensors that determine the pressure and/or the temperature at a point in the fluid circuit; wherein the pressure and/or the temperature enter into the control of the energy recovery system as regulation parameters; and wherein a desired value of the regulation parameter is specified on the basis of the available heat and/or on operating parameters of the internal combustion engine and/or of the turbocharger.

13. A powertrain system in accordance with one of the claims 10 to 12, wherein the control of the energy recovery system comprises the control of the mass flow through the fluid circuit of the energy recovery system and/or the control of the speed of the pump of the energy recovery system and/or the control of an operating pressure at a point in the fluid circuit of the energy recovery system.

14. A work unit and/or a vehicle having a powertrain system in accordance with one of the preceding claims, wherein the powertrain system advantageously serves the propulsion of a chassis and/or of an attachment and/or of the drive of a generator; and/or wherein the powertrain system drives a hydraulic pump of a hydraulic system.

## Revendications

1. Système de motopropulsion comprenant un moteur à combustion interne (1) et comprenant un système de récupération d'énergie (2) destiné à récupérer de l'énergie à partir de chaleur perdue, le système de récupération d'énergie comportant un circuit de fluide (3) comprenant au moins un échangeur de chaleur (7, 9, 11, 13), une pompe et une turbine de détente destinée à la transformation de la chaleur perdue en énergie mécanique, un flux de fluide pouvant être dirigé à travers au moins un échangeur de chaleur,
**caractérisé en ce que**
le moteur à combustion interne comporte un turbocompresseur (4) et un échangeur de chaleur est disposé dans une conduite de liaison entre le moteur à combustion interne (1) et une turbine (6) du turbocompresseur (4) en amont de la turbine du turbocompresseur, une dérivation pouvant être commandée étant prévue pour l'échangeur de chaleur, un autre échangeur de chaleur (13) du système de récupération d'énergie étant disposé dans une conduite de dérivation de la turbine (6) du turbocompresseur.

2. Système de motopropulsion selon la revendication 1, dans lequel le système de récupération d'énergie comporte au moins deux échangeurs de chaleur (7, 9, 11, 13), qui sont couplés de manière avantageuse en série.

3. Système de motopropulsion selon l'une des revendications précédentes, dans lequel
un autre échangeur de chaleur (7) du système de récupération d'énergie est disposé dans un circuit de fluide de refroidissement (8) du moteur à combustion interne et/ou dans une conduite d'air de suralimentation entre le compresseur (5) du turbocompresseur et le moteur à combustion interne (1) et/ou en aval d'un système de post-traitement des gaz d'échappement (10) dans une ligne d'échappement du moteur à combustion interne, l'autre échangeur de chaleur étant disposé dans le circuit de fluide (3) du système de récupération d'énergie en série avec l'au moins un échangeur de chaleur (13) et en aval par rapport à celui-ci.

4. Système de motopropulsion selon l'une des revendications précédentes, dans lequel
un autre échangeur de chaleur (13) du système de récupération d'énergie est disposé dans une conduite de recyclage des gaz d'échappement du moteur à combustion interne.

5. Système de motopropulsion selon l'une des revendications précédentes, dans lequel
deux échangeurs de chaleur ou plus sont couplés en parallèle dans le circuit de fluide du système de récupération d'énergie, au moins un troisième échangeur de chaleur étant, de manière avantageuse, couplé en série.

6. Système de motopropulsion selon l'une des revendications précédentes, dans lequel
le système de motopropulsion comporte un dispositif de commande (15) qui dirige le flux de gaz d'échappement à travers l'au moins un échangeur de chaleur (13) en fonction d'une température des gaz d'échappement.

7. Système de motopropulsion selon la revendication 6, dans lequel la commande est effectuée de telle sorte que la température ne passe pas en dessous d'une température minimale dans un système de post-traitement des gaz d'échappement (10) placé en aval.

8. Système de motopropulsion selon l'une des revendications précédentes, dans lequel
un autre échangeur de chaleur (13) est disposé dans une conduite de dérivation de la turbine (6) du turbocompresseur et la commande du flux de gaz d'échappement est effectuée par un agencement de soupape (14), qui est prévu dans la conduite de dérivation (12).

9. Système de motopropulsion selon l'une des revendications précédentes, comprenant un dispositif de commande, qui dirige le flux de gaz d'échappement à travers l'au moins un échangeur de chaleur (13) en fonction d'une température des gaz d'échappement et de conditions de fonctionnement du turbocompresseur.

10. Système de motopropulsion selon l'une des revendications précédentes, comprenant un dispositif de commande qui commande le fonctionnement du système de récupération d'énergie en fonction de l'apport de chaleur disponible et/ou de paramètres de fonctionnement du moteur à combustion interne et/ou du turbocompresseur.

11. Système de motopropulsion selon la revendication 10, dans lequel un capteur de température est prévu, qui mesure la température dans une zone du système de motopropulsion et en particulier une température du fluide qui dégage de la chaleur dans un échangeur de chaleur du système de récupération d'énergie, le dispositif de commande commandant le système de récupération d'énergie en s'appuyant sur les données du capteur de température.

12. Système de motopropulsion selon la revendication 10 ou 11, dans lequel le système de récupération d'énergie comporte un ou plusieurs capteurs, qui déterminent la pression et/ou la température à un endroit dans le circuit de fluide, la pression et/ou la température entrant comme grandeurs de réglage dans la commande du système de récupération d'énergie, et une valeur de consigne de la grandeur de réglage étant spécifiée sur la base de l'apport de chaleur et/ou des paramètres de fonctionnement du moteur à combustion interne et/ou du turbocompresseur.

13. Système de motopropulsion selon l'une des revendications 10 à 12, dans lequel la commande du système de récupération d'énergie comprend la commande du débit massique dans le circuit de fluide du système de récupération d'énergie et/ou la commande de la vitesse de rotation de la pompe du système de récupération d'énergie et/ou la commande d'une pression de fonctionnement à un endroit dans le circuit de fluide du système de récupération d'énergie.

14. Outil de travail et/ou véhicule comprenant un système de motopropulsion selon l'une des revendications précédentes, dans lequel
le système de motopropulsion sert de manière avantageuse à la propulsion d'un mécanisme de déplacement et/ou d'un équipement de travail et/ou de l'entraînement d'un générateur, et/ou dans lequel le système de motopropulsion propulse une pompe hydraulique d'un système hydraulique.
